# EUROPÄISCHE PATENTSCHRIFT

(11) **EP 0 756 695 B1**
(45) Veröffentlichungstag und Bekanntmachung des Hinweises auf die Patenterteilung: **30.06.1999**
(21) Anmeldenummer: 95915123.4
(22) Anmeldetag: 01.04.1995
(51) Int. Cl.: G01C 13/00, A01K 97/00

(54) **GEWÄSSERTIEFENMESSER**
WATER DEPTH GAUGE
INDICATEUR DE PROFONDEUR D'EAU

(30) Priorität: 20.04.1994 DE 4413727; 05.12.1994 DE 4443209
(43) Veröffentlichungstag der Anmeldung: 05.02.1997
(73) Patentinhaber: Sternal, Bernd, 06507 Gernrode (DE)
(72) Erfinder: Sternal, Bernd, 06507 Gernrode (DE)
(74) Vertreter: Kagelmann, Manfred, Dipl.-Ing.
(86) Internationale Anmeldenummer: DE9500450
(87) Internationale Veröffentlichungsnummer: WO9529382

(56) Entgegenhaltungen:
- EP-A- 0 439 255
- DE-A- 2 005 545
- GB-A- 2 230 862
- US-A- 3 721 124

## Beschreibung

Die Erfindung betrifft einen Gewässertiefenmesser zur Verwendung beim Angeln und bei der Sportfischerei.
Gemessen wird damit die Tiefe des Gewässers von der Wasseroberfläche bis zum Gewässergrund und/oder die Tiefe von Wasserschichten unterschiedlicher Temperatur innerhalb des Gewässers.

Bekannt ist ein digitaler Tiefenmesser mit piezoresistiver Druckaufnahme für Taucher mit eingebauter Beleuchtung und einer Nullpunktkorrektur für das Tauchen in Bergseen bis zu Tiefen von 200 m (DE 3145158A1).

Dieses Gerät ist aufgrund seiner Formgestaltung, seiner Größe und seines Gewichtes sowie insbesondere auch wegen seiner aufwendigen Ausführung für Angler und Sportfischer nicht geeignet.

Bekannt ist auch eine Vorrichtung zur Ermittlung des Profiles von Gewässerböden, welche im wesentlichen aus einer unmittelbar am Gewässerboden mittels Schnur bewegbaren Druckmeßdose besteht, deren Meßwerte kontinuierlich über eine Verbindung zu einer Auswertestation übertragen werden (G 76 05 605.8). Diese Vorrichtung dient insbesondere der Vorbereitung von Wasserbaumaßnahmen und ist für die Zwecke der Sportfischerei nicht geeignet.

Aus der EP-A-0 439 255 ist ein Gewässertiefenmesser bekannt, der in einem wasserdichten Gehäuse einen Drucksensor und eine Auswerteelektronik mit Speicher und Display enthält.

US-A-3 721 124 beschreibt einen Temperatursensor an einer Lotschnur mit Tiefenmaßeinteilung, der sich zum Aufnehmen des Temperaturprofils in ein Gewässer absenken läßt.

Beim Angeln und beim Sportfischen ist es erforderlich, den Köder einem Fisch artgerecht im entsprechenden Lebensraum anzubieten, wozu die Tiefe des Gewässers vom Angler oder Sportfischer exakt ermittelt werden muß. Dies erfolgt gegenwärtig so, daß ein Grundblei an der Angelschnur mit dazu beabstandeter Pose so oft ausgeworfen wird, eingeholt wird und der Abstand zwischen Grundblei und Pose verstellt wird, bis am Stand der Posenstellung der Abstand zwischen Gewässergrund und Gewässeroberfläche erkennbar ist. Dies ist eine mühsame und langwierige Prozedur, durch welche wegen des häufigen Auswurfes die Fische auch noch verscheucht werden.

Es ist auch bekannt, daß in fast allen Gewässern kalte und warme Gewässerschichten bzw. solche Strömungen vorhanden sind. In den Grenzbereichen solcher Gewässerschichten, d. h. an den Stellen, wo kalte und warme Gewässerschichten zusammentreffen, bestehen Temperaturdifferenzen von mehreren Kelvin. Diese Schichten werden von Anglern und Sportfischern auch als Sprungschichten bezeichnet. Diese Sprungschichten sind für den Angler und Sportfischer deshalb von besonderem Interesse, weil sich gerade hier sehr häufig Raubfische aufhalten, weshalb der Angler und Sportfischer möglichst genau in oder an diesen Sprungschichten seinen Köder plazieren will.
Sofern nicht auf die sehr aufwendige Prozedur einer Ermittlung dieser Sprungschichten völlig verzichtet wird und auf "gut Glück" geangelt wird, kann diese Sprungschicht nur mit einem Thermometer ausgelotet werden. Dies geschieht, indem ein solches systematisch oftmals nacheinander in den unterschiedlichen Gewässertiefen plaziert und zum Ablesen eingeholt wird, bis an einem gewissen Temperatursprung die ungefähre Tiefe der gesuchten Sprungschichten ermittelt worden ist. Nachteilig bei der Verwendung eines bekannten Thermometers für diesen Zweck ist der unverhältnismäßig große Aufwand, weshalb von Anglern und Sportfischern meist ganz auf die Ermittlung der Sprungschichten in den Gewässern verzichtet wird. Die Handhabung eines Thermometers zum Ausloten der Sprungschichten ist ohnehin nur von einem Boot aus möglich, weshalb ein Angler von Land aus überhaupt keine Möglichkeit zur Ermittlung der Sprungschichten hat.

Problem der Erfindung ist es, ein Tiefenmeßgerät für Angler und Sportfischer zu schaffen, welches zur Tiefenmessung eines Gewässers von dessen Oberfläche bis zum Gewässergrund und/oder zur Ermittlung der Tiefe von Gewässerschichten unterschiedlicher Temperatur geeignet ist, das einfach und handlich ist, das im Bereich relativ geringer Gewässertiefen zuverlässige Meßwerte liefert und das mit geringem Aufwand kostengünstig herzustellen ist.

Erfindungsgemäß wird das Problem dadurch gelöst, daß in einem wasserdichten Gehäuse mindestens ein elektrischer Drucksensor, ein Display mit Maximumspeicher, eine elektrische Batterie und ein Programmschalter angeordnet sind, wobei der Drucksensor einseitig über mindestens eine Druckausgleichsöffnung oder direkt mit der äußeren Umgebung des Gehäuses verbunden ist und Drucksensor, Batterie, Programmschalter und Display in an sich bekannter Weise so elektrisch zusammengeschaltet sind, daß die Meßwerte des Drucksensors im Display zur Anzeige gelangen und bis zu einer manuellen Rückstellung mittels Programmschalter im Display sichtbar bleiben.
Weiterhin sind im Gehäuse mindestens ein elektrischer Temperatursensor und eine digitale Auswertschaltung angeordnet, welche in an sich bekannter Weise gegebenenfalls auch mit anderen elektronischen Bauelementen so zusammen geschaltet sind, daß die Meßwerte des Temperatursensors beim Absenken des Gewässertiefenmessers von der digitalen Auswertschaltung so verarbeitet werden, daß beim Auftreten einer Sprungschicht mit einer Temperaturdifferenz von mehr als 3 Kelvin innerhalb eines bestimmten Weges die Gewässertiefe an dieser Meßstelle gemessen und registriert wird sowie der Meßwert im Display angezeigt wird, wo er bis zu einer manuellen Rückstellung mittels Programmschalter sichtbar bleibt.
In Ausgestaltung der Erfindung kann die digitale Auswertschaltung auch in an sich bekannter Weise mit den Meßwertgebern, dem Drucksensor und dem Temperatursensor, einem Meßdatenspeicher, dem Programmschalter sowie dem Display so zusammengeschaltet sein, daß unterschiedliche Meßwerte gespeichert werden, wie für Gewässertiefe, Sprungschichttiefe, Sprungschichtmächtigkeit, obere und untere Temperatur der Sprungschicht sowie vorherrschende Temperaturen in verschiedenen Gewässertiefen und daß sich diese Meßwerte mittels manueller Programmschaltung im Display sichtbar machen lassen.

Am Gehäuse befindet sich mindestens eine Öse oder eine Bohrung zur Befestigung einer Angelschnur oder einer Lotschnur. Das Gehäuse kann auch zweiteilig verschraubbar sein, wobei ein Teil des Gehäuses als Hohlraum ausgebildet ist, in welchem Beschwerungen in Form von gleich oder unterschiedlich großen Gewichten eingebracht werden können. Der Hohlraum ist zweckmäßigerweise mit Öffnungen zum Druckausgleich versehen.
Die Beschwerungen können aber auch als zum Gehäuse paßgerechte Formstücke ausgebildet sein und am Gehäuse außen anbringbar sein. Der erfindungsgemäße Gewässertiefenmesser ist in seiner konstruktiven Gestaltung dem beabsichtigten Verwendungszweck optimal angepaßt. Es ist klein und leicht, einfach zu handhaben und in seiner Wirkungsweise zuverlässig. Die Verwendung eines solchen Gerätes verringert die Mühen der Vorbereitung beim Angeln und erhöht die Erfolgsaussichten und damit den Spaß an der Freizeitgestaltung.

Der Gewässertiefenmesser läßt sich mit relativ geringem Aufwand in verschiedenen Varianten bei einem akzeptablen Preis-Leistungs-Verhältnis industriell herstellen.

Nachstehend wird die Erfindung an zwei Ausführungsbeispielen näher erläutert. Beispiel 1 bezieht sich auf eine Messung des Gewässergrundes und Beispiel 2 auf die Messung von Temperatursprungschichten.

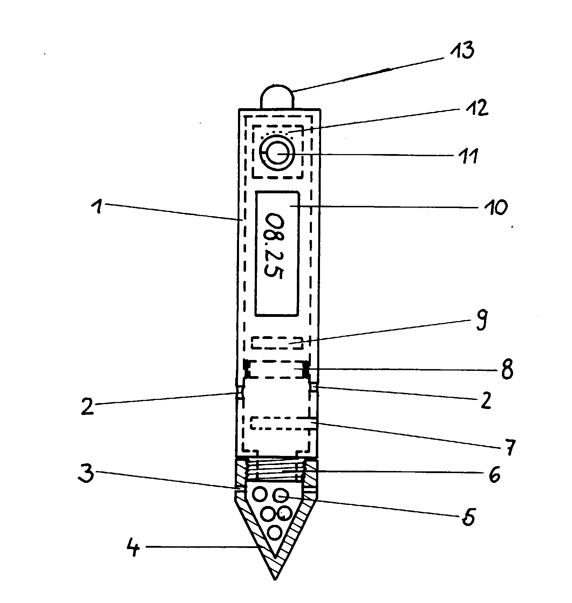

Die Zeichnung zeigt eine schematische Darstellung des erfindungsgemäßen Gewässertiefenmessers.

### Beispiel 1

Die Gehäuse 1; 4' sind zusammengeschraubt mit der Verschraubung 6. Das Gehäuse 4 ist als Hohlraum ausgebildet und mit Druckausgleichsöffnungen 3 versehen.
Das Gehäuse 1 enthält den druckempfindlichen elektrischen Drucksensor 8, die elektrische Batterie 9, das Display 10 und den Programmschalter 11. Der Drucksensor 8 schließt das Gehäuse 1 einseitig gegen einen mit Druckausgleichsöffnungen 2 versehenen Raum wasserdicht ab. Am Gehäuse ist die Öse 13 angeordnet. Drucksensor 8, Batterie 9 und Display 10 sind in bekannter Weise so elektrisch zusammengeschaltet und kalibriert, daß vom Drucksensor 8 registrierte Druckveränderungen im Display 10 in einem Längenmaß angezeigt werden und mittels eines Maximumspeichers lesbar bleiben bis eine manuelle Rückstellung der Anzeige im Display 10 erfolgt.

In Anwendung des Gewässertiefenmessers wird dasselbe an der Öse 13 an einer Angelschnur befestigt. Die Gehäuse 1 und 4 werden auseinandergeschraubt und der Hohlraum im Gehäuse 4 wird mit Gewichten 5 nach Ermessen des Anglers angefüllt. Sodann werden die Gehäuse 1 und 4 wieder miteinander verschraubt und das Display 10 mittels Programmschalter 11 auf Null gestellt.
Der an der Angelschnur befindliche Gewässertiefenmesser wird jetzt an der zu messenden Stelle bis auf den Gewässergrund abgesenkt, wobei der proportional zur Gewässertiefe herrschende Wasserdruck über die Druckausgleichsöffnungen 2 auf den Drucksensor 8 einwirkt und dessen Meßwert mittels der elektrischen Schaltung am Display 10 sichtbar macht. Durch den Maximumspeicher bleibt dieser Meßwert im Display 10 solange erhalten, bis das Gewässertiefenmesser wieder aus dem Gewässer gezogen, vom Angler abgelesen und mittels Programmschalter 11 zurückgestellt wurde. Nach dem so ermittelten Meßwert kann jetzt das Maß zwischen Köder und Pose exakt und artgerecht für die zu angeln beabsichtigte Fischart eingestellt werden.

### Beispiel 2

Das Gehäuse 1 ist mit dem Gehäuseteil 4 verschraubt. Das Gehäuseteil 4 ist hohl und weist Druckausgleichsöffnungen 3 auf. Es kann mit Beschwerungen 5 aufgefüllt werden.
Im Gehäuse 1 befinden sich ein elektrischer Drucksensor 8, ein elektrischer Temperatursensor 7, eine digitale Auswertschaltung 12, eine elektrische Batterie 9, ein von außen betätigbarer Programmschalter 11 und ein Display 10 sowie die Öffnungen 2 für den Drucksensor 8 und die Öffnung für den Temperatursensor 7. Diese elektrischen, elektronischen und mechanischen Baugruppen bzw. Bauelemente sind so in bekannter Weise zusammengeschaltet, daß die Meßwerte des Drucksensors 8 und des Temperatursensors 7 von der digitalen Auswertschaltung 12 verarbeitet und gespeichert werden können. Mittels des von außen betätigbaren Programmschalters 11 sind verschiedene gespeicherte und von der digitalen Auswertschaltung 12 bearbeitete Meßwerte vom Meßdatenspeicher abzufordern und im Display lesbar zu machen.
Am Gehäuse 1 befindet sich oberhalb desselben die Öse 13 zur Befestigung der Lotschnur.
In Anwendung des Gewässertiefenmessers wird dieser an einer Angel- oder Lotschnur mittels der Öse 13 befestigt, die Betriebsbereitschaft mittels Programmschalter 11 hergestellt und in das Gewässer abgesenkt. Die von den Druck- und Temperatursensoren 7; 8 gemessenen Werte werden von der digitalen Auswertschaltung 12 bearbeitet und dabei insbesondere die Tiefe bei einem Temperatursprung von mehr als 3 Kelvin registriert und gespeichert.
Vom tiefsten Meßpunkt des Gewässers an werden beim Herausnehmen des Gewässertiefenmessers keine Meßdaten mehr registriert und gespeichert. An dem aus dem Gewässer genommenen Gewässertiefenmesser lassen sich nun die von der digitalen Auswertschaltung 12 aufbereiteten und gespeicherten Meßdaten insbesondere der Temperatursprung bei einer gemessenen Tiefe mittels des Programmschalters 11 vom Datenspeicher abrufen und auf dem Display 10 lesbar machen. Anhand dieser Informationen kann der Angler jetzt für die sich an oder in der Sprungschicht vermuteten Fische artgerechte Köder plazieren und so seine Erfolgschancen positiv beeinflussen.

## Patentansprüche

1. Gewässertiefenmesser zur Messung der Tiefe eines Angel- oder Sportfischereigewässers von dessen Oberfläche bis zum Grund und/oder zur Messung der Tiefe und der Mächtigkeit von Wasserschichten unterschiedlicher Temperatur innerhalb solchen Gewässers mit einem wasserdichten Gehäuse (1; 4), in dem mindestens ein elektrischer Drucksensor (8), ein Display (10) mit Maximumspeicher, eine elektrische Batterie (9) und ein Programmschalter (11) angeordnet sind, wobei der Drucksensor (8) einseitig über mindestens eine Druckausgleichsöffnung (2) oder direkt mit der äußeren Umgebung des Gehäuses (1) verbunden ist und Drucksensor (8), Batterie (9) und Display (10) so elektrisch zusammengeschaltet sind, daß die Meßwerte des Drucksensors (8) im Display (10) zur digitalen Anzeige gelangen und bis zu einer manuellen Rückstellung mittels Programmschalter (11) im Display (10) sichtbar bleiben, wobei der Gewässertiefenmesser an einer Schnur in das Gewässer absenkbar ist, dadurch gekennzeichnet, daß im Gehäuse (1) neben dem Drucksensor (8), dem Display (10), der elektrischen Batterie (9) und dem Programmschalter (11) mindestens ein Temperatursensor (7) und eine digitale Auswertschaltung (12) angeordnet sind und so mit dem Drucksensor (8), der elektrischen Batterie (9), dem Display (10) und dem Programmschalter (11), gegebenenfalls auch mit anderen elektrischen Bauelementen so zusammengeschaltet sind, daß die Meßwerte des Temperatursensors (7) beim Absenken des Gewässertiefenmessers in das Gewässer von der digitalen Auswertschaltung so verarbeitet werden, daß beim Auftreten einer Sprungschicht mit einer Temperaturdifferenz von mehr als 3 Kelvin innerhalb eines bestimmten Weges die Gewässertiefe an dieser Stelle gemessen wird und der Meßwert registriert und gespeichert wird, wo er bis zu einer manuellen Rückstellung mittels Programmschalter (11) sichtbar bleibt.

2. Gewässertiefenmesser nach Anspruch 1 dadurch gekennzeichnet, daß die digitale Auswertschaltung (12) eine Vielzahl verschiedener Meßdaten verarbeitet und im Meßdatenspeicher speichert, wie für Gewässertiefe, Sprungschichttiefe, obere und untere Temperatur der Sprungschicht, Mächtigkeit der Sprungschicht sowie vorherrschende Temperaturen in verschiedenen Gewässertiefen, und daß sich diese Meßwerte mittels Programmschalter (11) abrufbar und im Display (10) sichtbar machen lassen.

3. Gewässertiefenmesser nach Anspruch 1 oder 2 dadurch gekennzeichnet, daß am Gehäuse (1) mindestens eine Öse (13) oder eine Bohrung zur Befestigung einer Angel- oder einer Lotschnur angeordnet ist.

4. Gewässertiefenmesser nach Anspruch 1 bis 3 dadurch gekennzeichnet, daß im Gehäuse (1) oder an demselben auswechselbare Beschwerungen vorzugsweise unterschiedlichen Gewichtes angeordnet sind.

5. Gewässertiefenmesser nach Anspruch 1 bis 4 dadurch gekennzeichnet, daß ein zweites Gehäuse (4) vorgesehen ist, welches mit dem Gehäuse (1) des Gewässertiefenmessers verschraubbar ist und mit diesem einen Hohlraum zur Aufnahme von Gewichten (5) bildet.

6. Gewässertiefenmesser nach Anspruch 5 dadurch gekennzeichnet, daß das zweite Gehäuse (4) mindestens eine Druckausgleichsöffnung (3) aufweist.

## Claims

1. Water depth sounder for measuring the depth of waters for angling and sports fishing, taking the measurements from water surface to ground and/or for measuring the depth and thickness of water strata with different temperatures within such a water; comprising a water-tight casing (1; 4) with at least one electric pressure sensor (8), one display (10) with maximum memory, one electric battery (9) and one program switch (11), with pressure sensor (8) unilaterally linked with the casing (1) through at least one pressure compensation hole (2) or directly linked with the outer periphery of casing (1), and with pressure sensor (8), battery (9) and display (10) electrically interconnected such that values measured by pressure sensor (8) are digitally shown on display (10) and kept visible in display (10) until the latter is manually reset with program switch (11); with the water depth sounder fitted to a cord and being lowerable into the water, the appliance being furthermore characterized by the fact that casing (1) accommodates at least one temperature sensor (7) and one digital evaluation circuit (12) in addition to pressure sensor (8), display (10), electric battery (9) and program switch (11) so that the items mentioned before are interconnected with pressure sensor (8), electric battery (9), display (10) and program switch (11) and any further electric components such that the values measured by temperature sensor (7) on lowering of water depth sounder can be processed by the digital evaluation circuit, water depth be measured in this location on occurrence of a thermocline with a temperature difference of more than 3 Kelvin within a certain path, and measured values are recorded, stored and kept visible up to manual resetting of program switch (11).

2. Water depth sounder according to claim 1, being characterized by the fact that the digital evaluation circuit (12) processes a multitude of measured data and keeps them in the data store, such as water depth, thermocline depth, upper and lower temperature of thermocline, thickness of thermocline and temperatures prevailing in the different water depths such that said measured values may be requested with the program switch (11) and indicated on the display (10).

3. Water depth sounder according to claim 1 or 2, being characterized by the fact that casing (1) has at least one lug (13) or one bore for fitting the fishing or plumb line.

4. Water depth sounder according to claims 1 to 3, being characterized by the fact that replaceable ballast pieces with perferably different weights are arranged inside casing (1) or fitting to the outside of casing.

5. Water depth sounder according to claims 1 to 4, being characterized by the fact that a second casing (4) is provided and to be screwed to casing (1) of water depth sounder, thereby forming a hollow space for accommodation of ballast weights (5).

6. Water depth sounder according to claim 5, being characterized by the fact that the second casing (4) has at least one pressure compensation opening (3).

## Revendications

1. Bathymètre destiné à mesurer la profondeur d'un plan d'eau pour la pêche à la ligne ou pour les sports de pêche depuis sa surface jusqu'au fond ou/et destiné à mesurer la profondeur et l'épaisseur de couches d'eau de température différente se trouvant dans un tel plan d'eau, pourvu d'un boîtier (1;4) étanche à l'eau dans lequel sont au moins disposés un capteur de pression électrique (8), un affichage (10) muni d'une mémoire à maximum, une batterie électrique (9) et un aiguillage de programme (11), le capteur de pression (8) étant relié au milieu extérieur du boîtier (1) directement ou d'une part par l'intermédiaire d'au moins d'une ouverture d'équilibrage de pression (2) et le capteur de pression (8), la batterie (9), l'affichage (10) étant connectés les uns avec les autres électriquement de telle façon que les valeurs de mesure du capteur de pression (8) sont affichées numériquement sur l'affichage (10) et restent visibles sur l'affichage (10) jusqu'à une remise à zéro manuelle au moyen de l'aiguillage de programme (11), le bathymètre étant susceptible d'être descendu à l'intérieur du plan d'eau suspendu à un cordon, **caractérisé par le fait qu'**au moins un capteur de température (7) et un circuit d'évaluation numérique (12) sont disposés dans le boîtier (1) à côté du capteur de pression (8), de l'affichage (10), de la batterie électrique (9) et de l'aiguillage de programme (11) et que ceux-ci sont interconnectés avec le capteur de pression (8), la batterie électrique (9), l'affichage (10) et l'aiguillage de programme (11), le cas échéant également avec d'autres composants électriques, de telle facon que, lors de la descente du bathymètre à l'intérieur du plan d'eau, les valeurs de mesure du capteur de température (7) sont traitées par le circuit d'évaluation numérique de telle façon que la profondeur du plan d'eau est mesurée à l'endroit où il apparaît une couche à changement brusque de température ayant une différence de température supérieure à 3 kelvins sur toute une trajectoire déterminée, et la valeur de mesure est enregistrée et mémorisée là où elle reste visible jusqu'à une remise à zéro manuelle au moyen de l'aiguillage de programme (11).

2. Bathymètre selon la revendication 1, **caractérisé par le fait que** le circuit d'évaluation numérique (12) traite plusieurs données de mesure différentes et les mémorise dans la mémoire pour données de mesure, comme la profondeur du plan d'eau, la profondeur de la couche où a lieu le changement brusque, la température minimale et maximale de la couche où a lieu le changement brusque, l'épaisseur de la couche où a lieu le changement brusque ainsi que des températures prédominant à différentes profondeurs du plan d'eau, et que ces valeurs de mesure sont susceptibles d'être appelées au moyen de l'aiguillage de programme (11) et d'être visualisées sur l'affichage (10).

3. Bathymètre selon la revendication 1 ou 2, **caractérisé par le fait qu'**au moins un oeillet (13) ou un perçage destiné à attacher une ligne ou un fil à plomb est disposé au boîtier (1).

4. Bathymètre selon la revendication 1 à 3, **caractérisé par le fait que** des charges susceptibles d'être remplacées étant de préférence d'un poids différent sont disposées dans le boîtier (1).

5. Bathymètre selon la revendication 1 à 4, **caractérisé par le fait qu'**il est prévu un second boîtier (4) qui est susceptible d'être vissé avec le boîtier (1) du bathymètre et qui forme avec celui-ci un espace creux destiné à accueillir des poids (5).

6. Bathymètre selon la revendication 5, **caractérisé par le fait que** le second boîtier (4) présente au moins une ouverture d'équilibrage de la pression (3).
